Europäisches Patentamt

European Patent Office

Office européen des brevets

(19)

(11) Veröffentlichungsnummer: **0 253 103**
**A1**

(12) **EUROPÄISCHE PATENTANMELDUNG**

(21) Anmeldenummer: 87107381.3

(22) Anmeldetag: 21.05.87

(51) Int. Cl.4 **F16D 13/04** , F16D 21/04 , F16H 3/14

(30) Priorität: 09.07.86 DE 3623142

(43) Veröffentlichungstag der Anmeldung:
**20.01.88 Patentblatt 88/03**

(84) Benannte Vertragsstaaten:
**DE ES GB IT NL SE**

(71) Anmelder: **Carl Hurth Maschinen- und Zahnradfabrik GmbH & Co**
**Moosacher Strasse 36**
**D-8000 München 40(DE)**

(72) Erfinder: **Sacher, Christoph**
**Amselweg 20**
**D-8029 Sauerlach/Arget(DE)**

(54) **Schaltbare Reibungskupplung für Zahnradgetriebe.**

(57) Bei einer als federbelastete Sicherheitskupplung ausgebildeten schaltbaren Reibungskupplung für Zahnradgetriebe ist die Schaltmuffe, die im Sinne des Ein-und Auskuppelns axial verschiebbar und in begrenztem Maße verdrehbar auf die zu kuppelnde Welle aufgesetzt ist, über mindestens eine um eine im wesentlichen senkrecht zur Achse der Welle verdrehbare Exzentereinrichtung mit der Welle verbunden derart, daß die Axialbewegung der Schaltmuffe im Sinne des Einkuppelns sowohl eine Verdrehung der Schaltmuffe relativ zur Welle als auch die zum Verstärken der Anpreßkraft erforderliche axiale Zusatzbewegung bewirkt, wobei die axiale Zusatzbewegung mit zunehmender Relativverdrehung abnimmt, und die Axialbewegung der Schaltmuffe im Sinne des Auskuppelns eine entgegengesetzt gerichtete Verdreh-und axiale Zusatzbewegung bewirkt, wobei die axiale Zusatzbewegung mit abnehmender Relativverdrehung zunimmt. Zum Verstärken der Zusatzbewegung kann eine die Schaltmuffe in ihrer Neutralstellung arretierende Feder durch entsprechende Formgebung herangezogen werden.

Fig.16

## Schaltbare Reibungskupplung für Zahnradgetriebe

Die Erfindung betrifft eine schaltbare Reibungskupplung für Zahnradgetriebe gemäß dem Oberbegriff des Hauptanspruchs.

Damit geht die Erfindung aus von einem Stand der Technik, wie er von der NL-A 8001933 bekannt ist. Dort ist ein Bootswendegetriebe gezeigt und beschrieben, bei dem zwei auf einer Abtriebswelle gelagerte Zahnräder mittels einer ebenfalls auf der Abtriebswelle angeordneten Schaltmuffe über Reibungskupplungen wahlweise mit der Welle kuppelbar sind. In der Schaltmuffe sind radial gerichtete Bolzen angeordnet, von denen jeweils ein Ende nach innen aus der Schaltmuffe herausragt und in je eine schräg zur Rotationsebene verlaufende Nut in der Abtriebswelle ragt. Die Schaltmuffe wird mittels federbelasteter Rasten in einer Neutralstellung gehalten. Wenn über einen Hebel von außen eine Axialkraft auf die Schaltmuffe aufgebracht wird, dann werden dei Rasten gegen ihre Federkraft gelöst und die Schaltmuffe über die an den Nutwänden anliegenden Bolzen sowohl relativ zur Welle verdreht als auch axial verschoben, wobei die Reibungskupplung eingeschaltet und dabei das zugehörige Zahnrad mit der Welle gekuppelt wird. . Wenngleich sich die Reibkörper der Kupplung gegen eine Feder abstützen, so erfolgt das Einkuppeln doch fast schlagartig. Der dabei entstehende sog. Einschaltstoß macht sich durch einen auf dem Boot - je nach Intensität-bisweilen unangenehmen Ruck bemerkbar und kann auch akustisch wahrgenommen werden.

Weiter wird es bei der bekannten Kupplungsbauart als nachteilig angesehen, daß die zum Ausschalten aufzubringende Kraft recht groß ist, was sich beim Manövrieren oder wenn im Gefahrenfall - schnell umgeschaltet werden muß besonders störend auswirkt.

Von daher liegt der Erfindung die Aufgabe zugrunde, die Reibungskupplung der genannten Art so weiterzuentwickeln, daß die genannten Nachteile vermieden werden.

Erfindungsgemäß wird das einer Reibungskupplung erreicht, die das kennzeichnende Merkmal des Hauptanspruchs aufweist und die mit den Merkmalen der Ansprüche 2 bis 6 vorteilhaft ausgestaltet werden kann.

Gegenüber der Ausführung nach Anspruch 6 kann die Anpreßkraft noch erhöht werden, wenn zusätzlich die Merkmale des Anspruchs 7 oder 8 vorgesehen werden, wobei die Ausführung nach Anspruch 8 kürzere Schaltwege der Schaltmuffe ermöglicht. Eine drehfest, aber axial verschiebbar auf die Welle aufgesetzte Führungsmuffe ist aus der DE-OS 28 28 722 im Zusammenhang mit einer anderen Bauart von schaltbaren Reibungskupplungen bekannt.

Um ein zu starkes Zusammendrücken der Feder zu vermeiden und um so die Betriebssicherheit zu erhöhen ist eine Weiterbildung mit dem Merkmal des Anspruchs 11 empfehlenswert. Dabei bietet diese Art des Anschlags den Vorteil, daß keine zusätzlichen Teile erforderlich sind.

Das Einschalten der Kupplung kann erleichtert werden, wenn sie das kennzeichnende Merkmal der Ansprüche 12 und/oder 17 aufweist. Diese Einrichtungen sind allerdings nur in einer Drehrichtung wirksam, weshalb sie zweckmäßigerweise bei solchen Kupplungen angewendet werden, die immer den gleichen Drehsinn aufweisen.

Die in den Ansprüchen 7 bis 9 genannten Steine sind ebenfalls nur bei Kupplungen mit immer gleichem Drehsinn anwendbar. Um die Erfindung auch bei Kupplungen mit wechselndem Drehsinn anwenden zu können, ist ein zweiter Stein nach Anspruch 13 oder 14 erforderlich.

Mit den Merkmalen der Ansprüche 15 und 16 werden weitere zweckmäßige Ausgestaltungen der Erfindung aufgezeigt, mit denen die Betriebssicherheit erhöht werden kann.

Die Erfindung wird nachstehend anhand von mehreren Ausführungsbeispielen beschrieben, die in insgesamt 34 Figuren dargestellt sind. Es zeigen:

Fig. 1 ein Getriebe mit einer Kupplung nach dem Stand der Technik in schematischer Darstellung;

Fig. 2 eine Variante des Getriebes nach Fig. 1;

Fig. 3 bis 7 verschiedene erfindungsgemäße Ausführungen der Schrägflächen;

Fig. 8 einen Längsschnitt durch eine erfindungsgemäße Ausführung einer Kupplung in ihrer Neutralstellung;

Fig. 9 einen Teilschnitt entlang der Linie IX-IX;

Fig. 10 bis 12 verschiedene Formen der Steine in der Neutralstellung der Kupplung;

Fig. 13 den Stein von Fig. 12 in der Stellung bei eingeschalteter Kupplung;

Fig. 14 einen Längsschnitt durch eine andere Ausführung der erfindungsgemäßen Kupplung in ihrer Neutralstellung;

Fig. 15 den Stein von Fig. 14 in einer Draufsicht;

Fig. 16 einen Querschnitt durch die Kupplung von Fig. 14;

Fig. 17 einen Anschlag in einem Teilschnitt entlang der Linie XVII-XVII;

Fig. 18 bis 21 die gleichen Teile wie Fig. 14 bis 17, jedoch in der Stellung bei eingeschalteter Kupplung;

Fig. 22 und 23 die Anordnung von zwei Steinen und ihr Zusammenwirken mit dem Bolzen in Neutralstellung der Kupplung in schematischer Darstellung analog Fig. 15;

Fig. 24 und 25 die Stellung der Steine und des Bolzens von Fig. 22 in der Stellung bei eingeschalteter Kupplung analog Fig. 19, für zwei verschiedene Drehrichtungen;

Fig. 26 die Situation von Fig. 19 für die andere Schaltstellung;

Fig. 27 eine Federkennlinie über dem Schaltweg;

Fig. 28 bis 30 den Zusammenhang zwischen der Federkraft und der Zusatzkraft an 3 Stellen des Schaltweges;

Fig. 31 ein Kräftediagramm;

Fig. 32 bis 34 das Zusammenwirken eines Schaltnockens mit der Schaltmuffe in verschiedenen Stellungen.

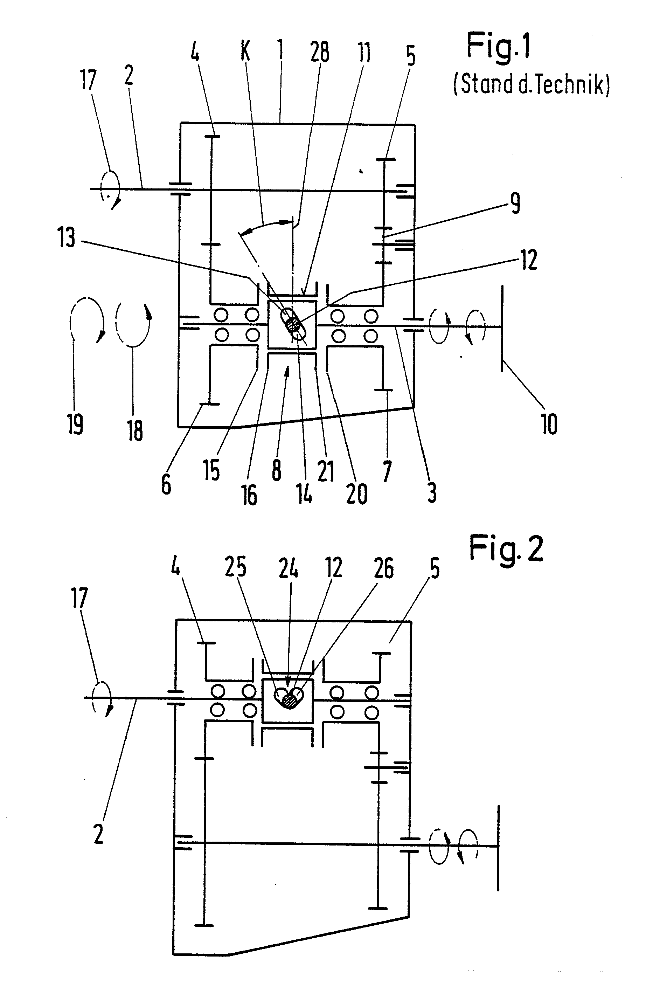

In der Fig. 1 ist stark vereinfacht ein Getriebe mit einer Kupplung herkömmlicher Art dargestellt, wie sie insbesondere bei Bootswendegetrieben angewendet wird. In einem Gehäuse 1 sind eine Antriebswelle 2 mit zwei Zahnrädern 4, 5 sowie eine Abtriebswelle 3 gelagert. Auf der Abtriebswelle 3 sind zwei Zahnräder 6, 7 drehbar gelagert, die mittels einer Reibungskupplung 8 wahlweise mit ihr gekuppelt werden können. Das Zahnrad 6 steht in Eingriff mit dem Zahnrad 4 und das Zahnrad 7 mit einem ebenfalls im Gehäuse gelagerten Zwischenrad 9, das außerdem mit dem Zahnrad 5 in Eingriff steht. Die Antriebswelle ist an ihrem aus dem Gehäuse 1 herausragenden Ende mit einem nicht dargestellten Motor verbunden und an einen Flansch 10 des aus dem Gehäuse 1 ragenden Endes der Abtriebswelle 3 kann eine weitere Welle, z.B. eine nicht dargestellte Propellerwelle, angeflanscht werden. Auf die Abtriebswelle 3 ist eine Schaltmuffe 11 axial verschiebbar und um einen kleinen Betrag verdrehbar aufgesetzt. Sie ist dazu mit radial gerichteten Bolzen 12 versehen, die an den Nutwänden (Schrägflächen 13) von in der Abtriebswelle 3 vorgesehenen Nuten 14 anliegen. Wird bei Drehung der Antriebswelle 2 in Pfeilrichtung 17 die Schaltmuffe aus der dargestellten Neutralstellung z.B. nach links verschoben, um die Abtriebswelle 3 mit dem Zahnrad 6 zu kuppeln, dann wird sie infolge der an den Schrägflächen 13 anliegenden Bolzen 12 in Pfeilrichtung 18 relativ zur Abtriebswelle 3 verdreht, wodurch die Pressung zwischen mit dem Zahnrad 6 verbundenen und mit der Schaltmuffe 11 verbundenen Reibkörpern 15, 16 verstärkt wird (Servoeffekt). Wird die Schaltmuffe dagegen bei gleichbleibender Antriebsdrehrichtung nach rechts verschoben, um die Abtriebswelle mit dem Zahnrad 7 zu kuppeln, dann wird sie in Pfeilrichtung 19 verdreht und verstärkt so den Anpreßdruck zwischen Reibkörpern 20, 21.

Sollte die Reibungskupplung 20 auf der Antriebswelle zwischen den Zahnrädern 4, 5 angeordnet werden (was aus konstruktiven bzw. räumlichen Gründen nicht immer möglich ist), dann ist die Verwendung gerader, durchgehender Nuten 14 nicht mehr möglich. Es müssen dann vielmehr abgewinkelte Nuten 24 mit entgegengesetzt gerichteten Schrägflächen 25, 26 vorgesehen werden (Fig.2). Andernfalls könnte wegen der immer gleichbleibenden Drehrichtung 17 der Antriebswelle eines der Zahnräder 4, 5 nicht mit der Antriebswelle 2 gekuppelt werden.

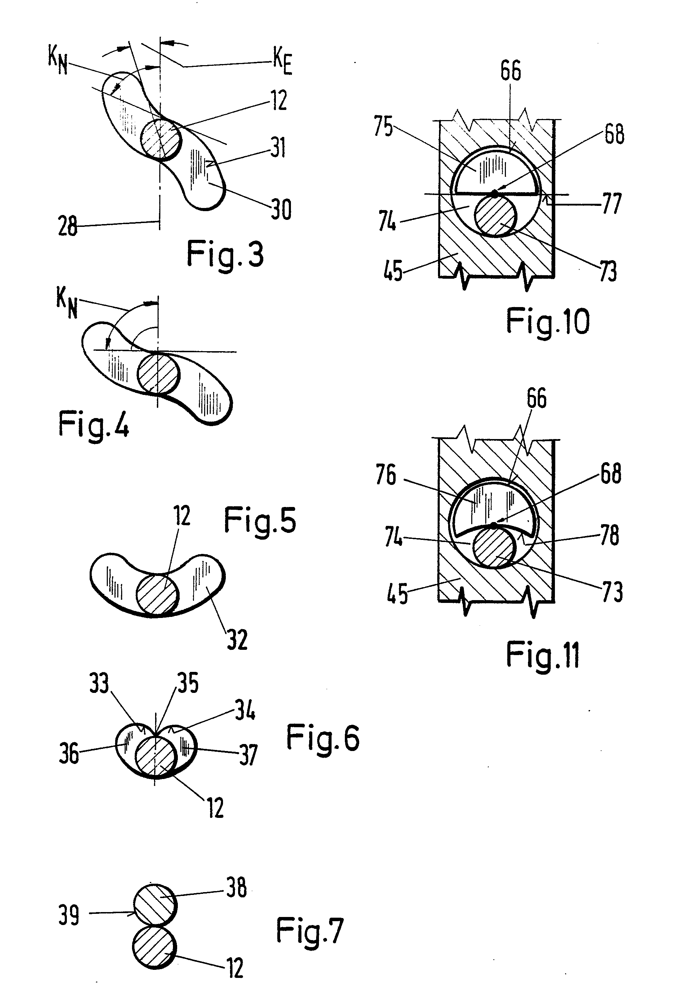

Zur Verminderung des Schaltstoßes und zur Minderung der Ausschaltkraft soll erfindungsgemäß ein zwischen der Rotationsebene 28 und der Schrägfläche 13 eingeschlossener Winkel K nicht über dem gesamten Schaltweg konstant sein. Aus diesem Grunde ist eine gekrümmte Nut 30 vorgesehen (Fig. 3), deren Schrägfläche 31 im Bereich der Anlage des Bolzens 12 bei Neutralstellung unter einem stumpferen Winkel $K_N$ verläuft als im weiteren Verlauf der Nut 30 bis zum Bereich der Anlage des Bolzens bei eingeschalteter Kupplung. Im letztgenannten Bereich ist ein rechnerisch oder experimentell ermittelter Winkel $K_E = K_{soll}$ vorhanden, der maximal vorhanden sein darf für einen selbständig ablaufenden Schaltvorgang bzw. für die danach erfolgende Kraft- und Bewegungsübertragung. Solange an einem beliebigen Ort der Schrägfläche der dort vorhandene Winkel $K_{ist}$ größer ist als der Winkel $K_{soll}$ ist zum Bewerkstelligen des Schaltvorganges noch eine Zusatzkraft $P_z$, auf die weiter unten noch eingegangen wird, erforderlich. In der Neutralstellung kann der Winkel $K_{ist}$ im Extremfall 90° sein, wie Fig. 4 zeigt.

Für eine in immer gleichbleibender Drehrichtung arbeitende Kupplung analog Fig. 2 hat die dort mit 32 bezeichnete Nut dann die in Fig. 5 gezeigte Form. Nachteilig können sich hier die großen Axialwege zwischen der Neutral- und der Endstellung auf den Platzbedarf der Kupplung auswirken. Um kurze Axialwege realisieren zu können kann die Anlage des Bolzens 12 im Extremfall eine von den Nutwänden 33, 34 gebildete Kante 35 sein. Um diese Kante 35 rollt der Bolzen 12 am Anfang des Schaltvorgangs ehe er in die eigentliche Nut 36, 37 gelangt. Wegen der hohen spezifischen Pressung zwischen der Kante 35 und dem Bolzen 12 wird diese Ausführung nur in Sonderfällen angewendet werden.

Es ist nach einem anderen Ausführungsbeispiel auch möglich, die Bolzen 12 an anderen Bolzen 38 abzustützen, die radial aus der Antriebswelle 2 oder der Abtriebswelle 3 herausragen. Die Mantelfläche 39 des Bolzens 38 übernimmt dann die Funktion der Schrägflächen 33, 34. Eine nicht dargestellte Wälzlagerung der Bolzen 12, 38 in der Schaltmuffe 11 und in der Antriebswelle 2 ist dabei vorteilhaft.

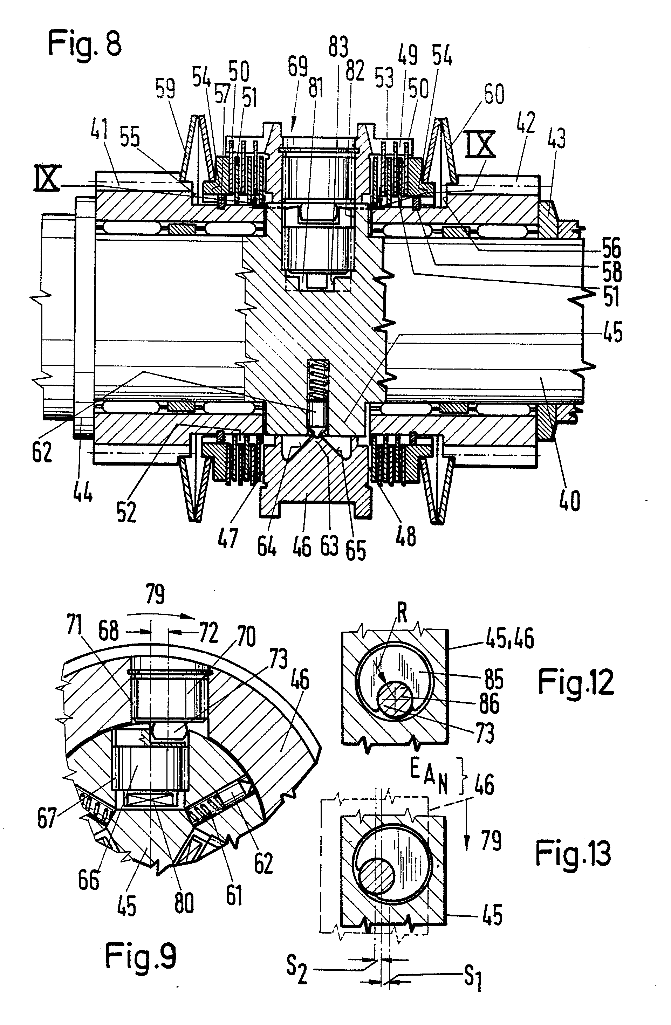

Eine Kupplung, die die Vorteile der kurzen Schaltwege gemäß Figur 6 und der wälzgelagerten Bolzen gemäß Fig. 7 in sich vereint wird anhand einer in den Figuren 8 bis 13 dargestellten Doppelkupplung gezeigt. Mit dieser Doppelkupplung wird eine Welle 40 wahlweise mit Zahnrädern 41, 42 verbunden, die drehbar auf der Welle 40 gelagert und axial mit geeigneten Mitteln, z.B. mit Scheiben 43 oder einer Schulter 44, gehalten sind. Zwischen den beiden Zahnrädern 41, 42 ist die Welle 40 mit einem Bund od.dgl. versehen, der als Schaltmuffenträger 45 dient. Auf dem Schaltmuffenträger 45 ist eine Schaltmuffe 46 innerhalb gewisser Grenzen axial verschiebbar und in Umfangsrichtung verdrehbar aufgesetzt. Die Schaltmuffe 46 weist beidseitig Druckflächen 47, 48 auf sowie Vorsprünge 53 mit Aussparungen 49 zur Aufnahme der Nasen von Außenlamellen 50. Die Außenlamellen 50 wirken mit Innenlamellen 51 zusammen, die mit einer Innenverzahnung in eine entsprechende Außenverzahnung 52 der Zahnräder 41, 42 eingreifen. Die so gebildeten Lamellenpakete werden axial nach außen von je einer Druckplatte 54 abgestützt. Die Druckplatten 54 sind mit axialem Spiel neben den Lamellen 50, 51 angeordnet. Das Spiel wird begrenzt einerseits durch Schultern 55, 56 an den Zahnrädern 41, 42 und andererseits durch Sprengringe 57, 58. Letztere sind so angeordnet, daß die von Tellerfedern 59, 60 im Sinne des Einkuppelns belasteten Druckplatten 54 die Lamellen 50, 51 nicht zusammenpressen, wenn sich die Schaltmuffe 46 in der Neutralstellung (wie in Fig. 8 dargestellt) befindet.

Im Schaltmuffenträger 45 ist mindestens ein von einer Feder 61 belasteter Raststift 62 radial verschiebbar geführt. In der Mitte der Schaltmuffe 46 ist eine passende Rastkerbe 63 zum Arretieren der Schaltmuffe im ausgeschalteten Zustand (Neutralstellung) vorgesehen. Daneben befinden sich Schrägflächen 64, 65. Der Raststift 62 unterstützt im Zusammenwirken mit den Schrägflächen 64, 65 den jeweiligen Einschaltvorgang, indem er der Schaltmuffe 46 zwischen den Punkten A und E des Schaltweges S₂ eine Initialkraft erteilt. Außerdem fixiert der an der entsprechenden Schrägfläche 64, 65 anliegende Raststift 62 den Einschaltzustand im Punkt E.

Im Schaltmuffenträger 45 ist ferner mindestens ein im folgenden als Stein bezeichnetes Bauteil 66 in Wälzlagern 67 um eine radiale Achse 68 drehbar aufgenommen. Um eine dazu parallele, aber in Umfangsrichtung versetzte Achse 72 drehbar ist ein Bolzen 70 in der Schaltmuffe 46 in Wälzlagern 71 aufgenommen. Dabei liegt, in Drehrichtung 79 gesehen, die Achse 72 des Bolzens 70 in der Neutral-stellung hinter der Achse 68 des Steins 66. Der Bolzen 70 ragt mit einem im Durchmesser abgesetzten balligen Zapfen 73 in eine Ausnehmung 74 des in diesem Bereich einen halbkreisförmigen (75) oder sichelförmigen (76) Querschnitt aufweisenden Steins 66 (Fig. 10, 11). In der Neutralstellung liegt der Zapfen 73 an einer von der Achse 68 tangierten Stelle der geraden (77) bzw. konkaven Seitenfläche 78 des Steins 66 an.

Beim Einschalten der Kupplung wird durch Verschieben der Schaltmuffe 46, z.B. nach links im Sinne der Fig. 8, zunächst ein Leerweg zurückgelegt und das Lamellenspiel aufgehoben. (Das Verschieben der Schaltmuffe kann beispielsweise mit einem nicht dargestellten Schaltnocken erfolgen, der in eine Umfangsnut 69 der Schaltmuffe eingreift und mit einem ebenfalls nicht dargestellten Schalthebel verdreht wird.) Auf dem bis dahin zurückgelegten Weg S₁ hat die Schaltmuffe 46 die Neutralstellung N verlassen und eine Stellung A erreicht. Der Raststift 62 liegt jetzt an der Schrägfläche 65 an und erzeugt die ebenfalls nach links im Sinne der Fig. 8 gerichtete Initialkraft, die zusammen mit einer Zusatzkraft P_z erforderlich ist, um den weiteren Schaltvorgang über den Weg S₂ bis zu einer Endstellung E selbständig ablaufen zu lassen, d.h. ohne von außen Einfluß nehmen zu können bzw. nehmen zu müssen. Der selbständige Ablauf des Schaltvorganges wird unterstützt durch die Exzenterwirkung des Steins 66. Sobald nämlich die Schaltmuffe die Neutralstellung N verlassen hat, liegen die Achse 68 des Steins 66 und die Achse 72 des Bolzens 70 nicht mehr in einer gemeinsamen Ebene. Da der Stein 66 nicht nach rechts oder links im Sinne der Fig. 8 ausweichen kann, wird ihm durch den Bolzen 70 eine Verdrehung aufgezwungen, die den Bolzen 70 und damit die Schaltmuffe noch weiter nach links drückt und damit ein stärkeres Zusammenpressen des Lamellenpakets 50, 51 bewirkt.

Die Steine 66 sind an ihren dem Bolzen 70 abgewendeten Enden mit einer Leiste 80 versehen. Jede Leiste 80 ragt in eine Ausnehmung 81 im Anschluß an eine den Stein 66 aufnehmende Bohrung 82 des Schaltmuffenträgers 45, und zwar in der Neutralstellung der Schaltmuffe 46 mit beiderseitigem Spiel. Die Leisten 80 wirken zusammen mit den Wänden 83 der Ausnehmungen 81 als Anschlag für die Steine 66, die sich so nur über einen begrenzten Winkel drehen können. Da beim Kuppeln die Verdrehung der Steine 66 als Exzenter auf die Schaltmuffe 46 wirkt, benötigt diese für ihre Axialbewegung auch eine Beweglichkeit in Umfangsrichtung. Da andererseits die Wände 83 als Anschlag die Verdrehung der Steine 66 begrenzen, dienen sie auch als Anschlag für die Axialbewegung der Schaltmuffe 46. Beim Kuppeln drückt die Schaltmuffe 46 die Lamellen 50, 51 nicht gegen eine feste Endscheibe, sondern gegen die federnd nachgebenden Druckplatten 54. Die maximale Reibungskraft zwischen den Lamellen 50, 51 hängt somit von der Spannung der Federn 59, 60 ab.

Aus den Figuren 10, 11 ist ersichtlich, daß der halbkreisförmige (75) oder sichelförmige (76) Querschnitt des Steins einen verhältnismäßig langen Weg $S_2$ zwischen dem Anfang des selbständigen Ablaufs des Schaltvorganges (Stellung A der Schaltmuffe 46) und dem Ende des Schaltvorganges (Stellung E der Schaltmuffe) bedingt. Vorteilhafter ist deshalb ein hufeisenförmiger Querschnitt 85, wie in Fig. 12 und 13 gezeigt, bei dem die konkave Seitenfläche 86 so um den Zapfen 73 herumgezogen ist, daß ihr Krümmungsradius R im wesentlichen dem halben Durchmesser des Zapfens 73 entspricht. Diese Ausführung bietet darüber hinaus den Vorteil einer niedrigeren spezifischen Pressung zwischen Zapfen 73 und Seitenfläche 86.

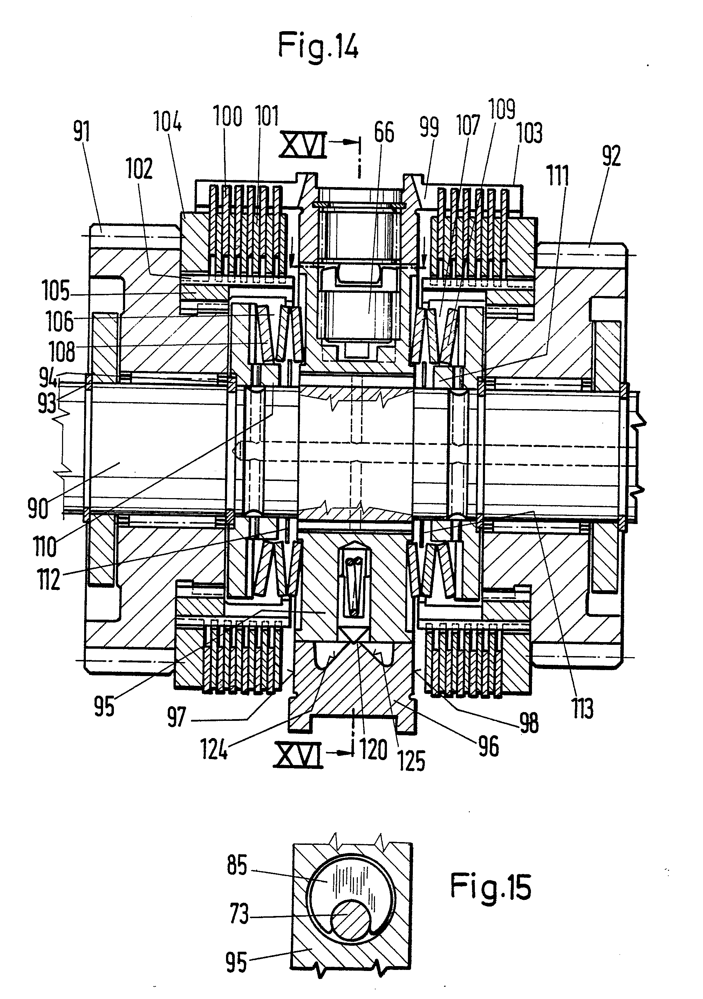

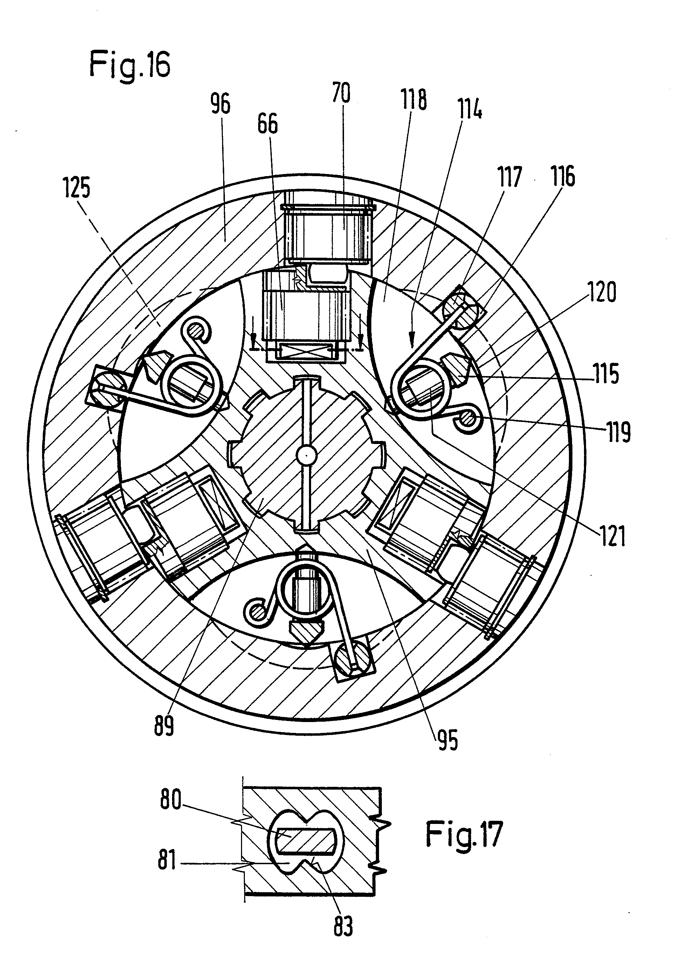

Die Addition der Schaltwege $S_1$ und $S_2$ beim Ausführungsbeispiel nach Fig. 8 ergibt einen verhältnismäßig großen Gesamtweg, den die Schaltmuffe 46 zwischen der Neutralstellung N und der Einschaltstellung E zurücklegen muß. Mit der in den Figuren 14 bis 17 (Neutralstellung) bzw. 18 bis 21 (Einschaltstellung) gezeigten Ausführung einer Doppelkupplung ist ein kürzerer Gesamtweg erreichbar.

Mit dieser Kupplung wird eine Welle 90 wahlweise mit Zahnrädern 91, 92 verbunden, die drehbar auf der Welle 90 gelagert und in axialer Richtung mit geeigneten Mitteln, z.B. Sprengringen 93, 94 gehalten sind. Zwischen den beiden Zahnrädern 91, 92 ist mit wenigstens einer Paßfeder oder einem Vielkeilprofil 89 drehfest, aber axial verschiebbar eine Führungsmuffe 95 aufgesetzt. Auf der Führungsmuffe 95 ist eine Schaltmuffe 96 innerhalb gewisser Grenzen axial verschiebbar und in Umfangsrichtung verdrehbar augesetzt. Die Schaltmuffe 96 weist beidseitig Druckflächen 97, 98 auf sowie Vorsprünge 103 mit Aussparungen 99 zur Aufnahme der Nasen von Außenlamellen 100. Diese wirken mit Innenlamellen 101 zusammen, die mit einer Innenverzahnung in eine entsprechende Außenverzahnung 102 der Zahnräder 91, 92 eingreifen. In der Fig.14 ist die Außenverzahnung 102 auf einem drehfest mit dem Zahnrad 91, 92 verbundenen Lamellenträger 105 angeordnet, sie kann bei entsprechender Gestaltung des Zahnrades auch direkt an diesem angebracht sein. Auf der der Schaltmuffe 96 abgewendeten Seite des Lamellenpakets 100, 101 ist - gewissermaßen als letzte Innenlamelle - eine Druckscheibe 104 vorgesehen, die am Zahnrad 91, 92 anliegt. Zwischen der in Neutralstellung befindlichen Schaltmuffe 96 und der Druckscheibe 104 haben die Lamellen 100, 101 axiales Spiel.

Zwischen den Zahnrädern 91, 92 und der Führungsmuffe 95 sind ringförmige Kammern 106, 107 vorhanden, die nach innen von der Welle 90 und nach außen von den Lamellenträgern 105 bzw. der Außenverzahnung 102 begrenzt sind.

Die Kammern 106, 107 nehmen von Tellerfedern gebildete Federpakete 108, 109 auf, die sich an der Führungsmuffe 95 und über Winkelringe 110, 111 an den Sprengringen 94 und somit an der Welle 90 abstützen. Damit wird die Führungsmuffe 95 in ihrer Neutralstellung gehalten. Die Tellerfedern werden auf den Winkelringen 110, 111 und an Vorsprüngen der Führungsmuffe 94 zentriert. Bei einer axialen Verschiebung der Führungsmuffe, die noch erläutert wird, können Ringe 112, 113 eine zusätzliche Führungsfunktion ausüben. In der Führungsmuffe 95 ist mindestens ein von einer Feder 114 belasteter Raststift 115 radial verschiebbar geführt. Zur Aufnahme der mindestens einen Schenkelfeder 114 und des mindestens einen Raststiftes 115 ist die Führungsmuffe 95 mit entsprechenden Taschen 118 versehen. Die Feder 114 ist als Schenkelfeder ausgeführt, deren einer Schenkel in der Führungsmuffe 95 fixiert, z.B. um einen die Tasche 118 durchdringenden Stift 119 gewickelt ist und deren anderer Schenkel in eine radiale Ausnehmung 116 der Schaltmuffe 96 ragt, wo er sich über ein kugel-oder rollenförmiges Gleitstück 117 abstützt. Die Windung der Feder 114 ragt in einen Schlitz 121 des Raststiftes 115 und drückt ihn in der Neutralstellung der Schaltmuffe 96 radial gegen eine Rastkerbe 120 in der Schaltmuffe 96. Beiderseits der Rastkerbe 120 sind Schrägflächen 124, 125 in der Schaltmuffe 96 vorgesehen. Die Raststifte 115 arbeiten mit diesen Schrägflächen in der gleichen Weise zusammen wie die oben beschriebenen Raststifte 62 mit den Schrägflächen 64, 65. Die Schenkelfedern 114 und die Raststifte 115 können in gleicher Anordnung auch bei der Kupplung nach Fig. 8, 9 anstelle der Federn 61 und der Raststifte 62 vorteilhaft angewendet werden.

In der Führungsmuffe 95 ist ferner mindestens ein Stein 66 drehbar aufgenommen und in der Schaltmuffe 96 ist mindestens ein zugehöriger Bolzen 70 drehbar aufgenommen. Die Anordnung und die Lagerung des mindestens einen Steins 66 und des mindestens einen Bolzens 70 sind dieselben wie oben beschrieben. Auch ist der Stein 66 wieder mit der Leiste 80 versehen, die in die als Anschlag ausgebildete Ausnehmung 81 ragt.

Beim Einschalten der Kupplung wird durch Verschieben der Schaltmuffe 96, z.B. nach links im Sinne der Fig. 14 zunächst wieder ein Leerweg zurückgelegt und das Lamellenspiel aufgehoben. Dabei verläßt sie die Neutralstellung N und erreicht nach einem Weg $S_1$ die Stellung A, von der an der weitere Schaltvorgang selbständig abläuft, was durch die Exzenterwirkung des Steins 66 unterstützt wird. Dabei drückt die Schaltmuffe 96 die Lamellen 100, 101 gegen die starre Druckscheibe 104, während sich die Führungsmuffe in entgegengesetzter Richtung ausweichend gegen das Federpaket 109 abstützt. Die Exzenterwirkung erzeugt also nicht eine weitere axiale Bewegung der Schaltmuffe 96 nach links, sondern eine Bewegung der Führungsmuffe 95 nach rechts. Dieser Weg $S_2$ addiert sich also nicht zum Weg $S_1$, wodurch die Schaltmuffe 96 - im Gegensatz zur oben beschriebenen Schaltmuffe 46 -nur diesen Weg $S_1$ zurücklegen muß. Die maximale Reibungskraft zwischen den Lamellen 100, 101 hängt also von der Spannung des Federpakets 109 ab.

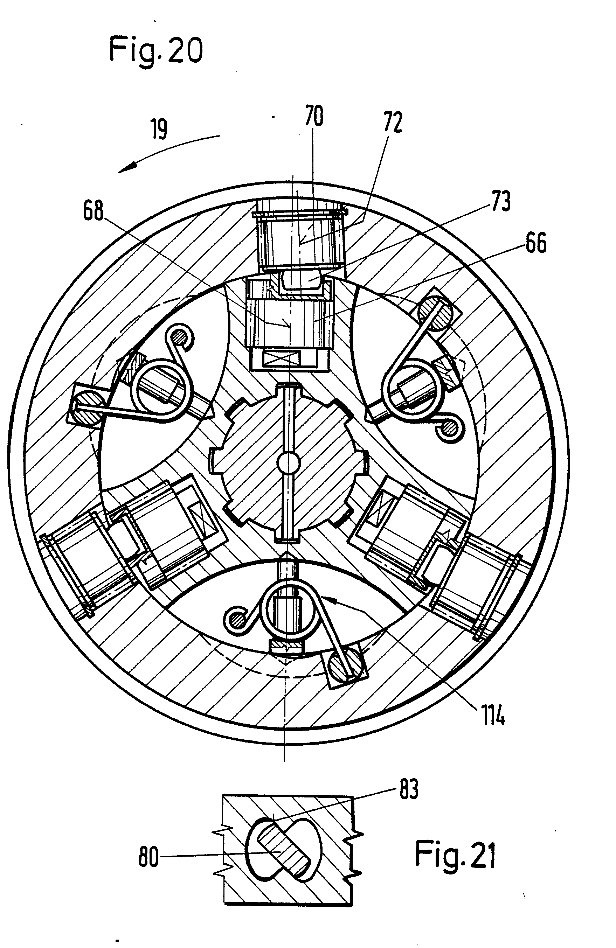

Wenn die Schaltmuffe 96 infolge der Exzenterwirkung relativ zur Führungsmuffe 95 verdreht wird (Pfeilrichtung 19), ergibt sich eine Schiefstellung zwischen dem Bolzen 70 und dem Stein 66 bzw. zwischen den Achsen 72, 68 (Fig. 20). Um trotzdem ein einwandfreies Zusammenwirken dieser Teile zu gewährleisten ist den Zapfen 73 am unteren Ende des Bolzens 70 ballig ausgeführt.

Die Exzenterwirkung wird noch verstärkt durch die Federn 114, die unter Vorspannung eingesetzt sind. Die daraus resultierende Spreizkraft bewirkt ein Verdrehen der Schaltmuffe 96 relativ zur Führungsmuffe 95 in Pfeilrichtung 19. Diese Spreizkraft nimmt dabei ab, was aber wegen der sich verstärkenden Wirkung des Exzenters ohne nachteiligen Einflußist. In der Neutralstellung N ist eine kleine radiale Kraftkomponente vorhanden, die den Raststift 115 in die Rastkerbe 120 drückt. Erst bei zunehmender Aufspreizung steigt diese Kraftkomponente an und wird über die Kegelspitze des Raststiftes 115 und die Schrägflächen 124, 125 in eine Axialkraft umgesetzt.

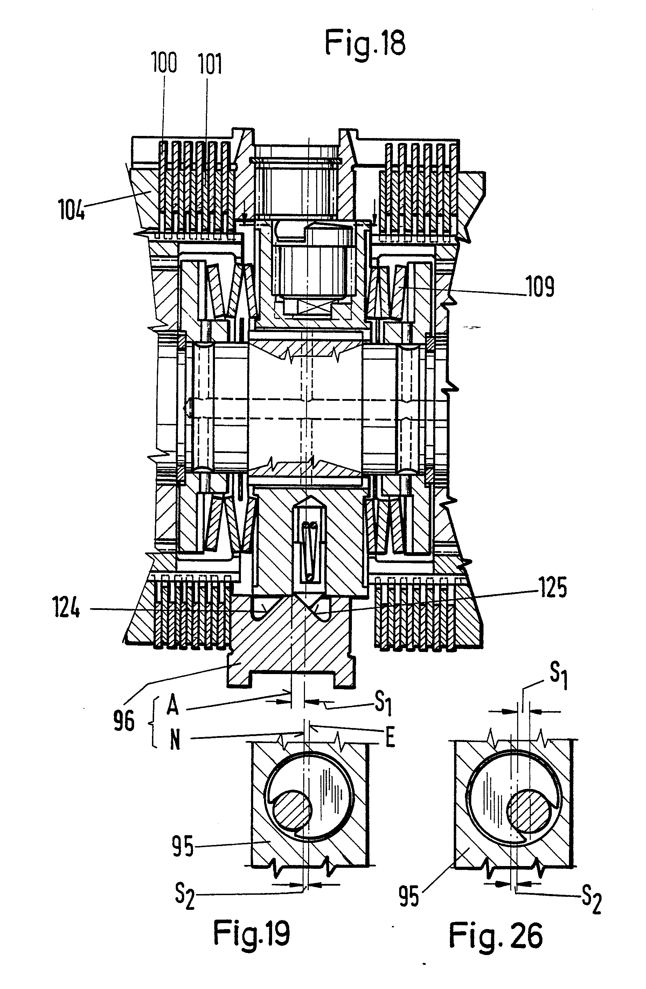

Wenn die Schaltmuffe zum Kuppeln des Zahnrades 92 mit der Welle 90 nach rechts im Sinne der Fig. 14 verschoben wird, dann laufen alle Bewegungen sinngemäß, aber in entgegengesetzter Richtung ab. Analog zur Fig. 19 ist in Fig. 26 die dann vorliegende Endstellung E des Bolzens 70 und des Steins 66 gezeigt.

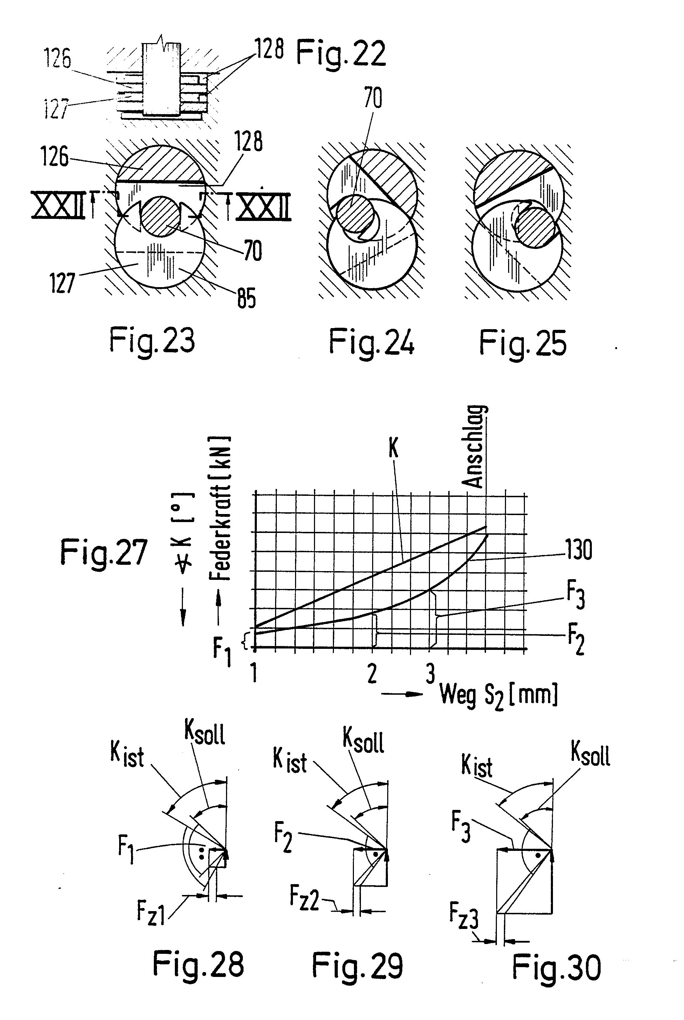

Die vorstehend beschriebene Kupplung mit den Steinen 66 mit halbkreis-, sichel-oder hufeisenförmigem Querschnitt ist nur bei immer gleichbleibender Drehrichtung 17 der Welle 40, 90 anwendbar. Mit den schematischen Figuren 22 und 23 (Neutralstellung) bzw. 24 und 25 (Einschaltstellung) wird eine für beide Drehrichtungen 17, 22 der Welle 40, 90 verwendbare Anordnung aufgezeigt. Hier sind zwei Steine 126, 127 vorgesehen, deren hufeisenförmige Querschnitte 85 mit Schlitzen 128 versehen sind, in die der hufeisenförmige Querschnitt des jeweils anderen Steins 127, 126 hineinragt. Je nachdem, ob die Schaltmuffe nach links (Fig. 24) oder nach rechts (Fig. 25) verschoben wird, wirkt der Bolzen 70 bzw. sein Zapfen 73 auf den Stein 126 oder auf den Stein 127. Der jeweils andere Stein 127, 126 wird zwar auch aus seiner Neutralstellung herausgeschwenkt, übernimmt dabei aber keine Aufgabe, weil sich der Bolzen 70 nicht an ihm abstützt.

Wie schon oben erwähnt ist, ist zum Bewerkstelligen des Schaltvorganges zusätzlich zu der von den Raststiften 62, 115 über die Schrägflächen 64, 65; 124, 125 erzeugten Axialkraft noch eine Zusatzkraft $P_z$ erforderlich, um die von dem jeweiligen Winkel $K_{ist} < K_{soll}$ entgegengesetzte Hemmung zu überwinden. Mit der von außen aufzubringenden Zusatzkraft $P_z$ wird gewissermaßen das Vorhandensein eines Winkels $K_{soll}$ vorgetäuscht. In Verbindung mit einer progressiven Federkennlinie 130 der Federpakete 59, 60; 108, 109 (Fig. 27) ist es möglich, über den gesamten Schaltweg $S_2$ mit einer zumindest annähernd gleichbleibend kleinen Zusatzkraft $P_z$ auszukommen. Diese kann von der Schenkelfeder 114 aufgebracht werden. In Fig. 27 ist außer der Federkennlinie 130 auch der Winkel K über dem Schaltweg $S_2$ aufgetragen. Die Fig. 28 bis 30 zeigen die erforderliche Zusatzkraft $F_z$ für die Punkte 1, 2 und 3 auf dem Schaltweg, wobei 1 der Anfangsstellung A und 3 der normalen Endstellung E entsprechen. Es ist deutlich, daß $F_{z1}$ $F_{z2}$ und $F_{z3}$ zumindest annähernd gleich groß sind und die Forderung $F_{z3} \leq F_{z2} \leq F_{z3}$ erfüllen. Mit dem Winkel $K_A$ größer als $K_E$ bzw. mit $K_{ist} > K_{soll}$ wird ein den Schaltstoß verringernder Dämpfungseffekt erzielt.

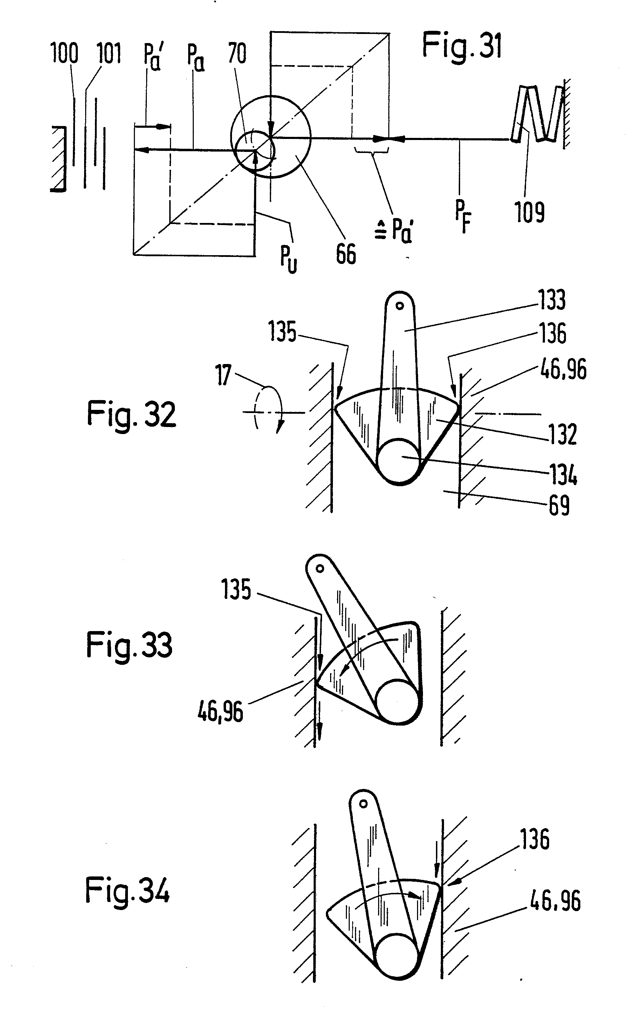

Wenn die Kupplung eingeschaltet ist (Stellung E der Schaltmuffe bzw. der Führungsmuffe) herrscht ein Kräftegleichgewicht sowohl in axialer Richtung als auch in Umfangsrichtung. In Fig. 31 ist das in Form eines Kräftediagrammes dargestellt. Wenn beim Ausschalten die Axialkraft $P_a$ um einen Wert $P_a'$ verringert wird, z.B. durch Aufbringen einer Kraft auf die Schaltmuffe von außen, dann wird auch die Umfangskraft $P_u$ abgebaut und in gleichem Maße auch die Reaktionskräfte. Dabei kommt es zu einem Überschuß der Federkraft $P_F$, mit dem der Exzenter von Bolzen 70 und Stein 66 zurückgedreht wird, so daß nur die zum Überwinden der Differenz der Winkel $K_{soll}$ und $K_{ist}$ erforderliche Kraft von außen aufgebracht werden muß.

Für Kupplungen auf Wellen mit immer gleichbleibender Drehrichtung 17 kann man noch die Reibung zwischen einem auf die Schaltmuffe einwirkenden Nocken und der Schaltmuffe zum Erleichtern des Ein-und auch des Ausschaltvorganges ausnutzen. In Fig. 32 ist - schematisiert ein Nocken 132 gezeigt, der in der Neutralstellung symmetrisch zur Umfangsnut 69 der Schaltmuffe 46, 96 liegt. Zum Betätigen, d.h. Verdrehen des Nockens 132 ist außen am Getriebe ein Schalthebel 133 angeordnet. Die Drehachse 134 des Nockens 132 und des Schalthebels 133 liegt - in Drehrichtung 17 gesehen - hinter den Profilkanten 135, 136 des Nockens. Wird der Nocken 132 zum Einschalten der Kupplung nach links geschwenkt (Fig. 33), dann wird die zwischen der Schaltmuffe 46, 96 und der Profilkante 135 entstehende Reibung den Nocken 132 weiterzuschwenken suchen, was ein weiteres Ausweichen der Schaltmuffe 46, 96 nach links zur Folge hat. Wird der Nocken 132 dann zum Ausschalten nach rechts geschwenkt (Fig. 34), dann wird die zwischen der Schaltmuffe 46, 96 und der Profilkante 136 entstehende Reibung den Nocken weiter nach rechts zu schwenken suchen und dabei Schaltmuffe 46, 96 weiter nach rechts, d.h. im Sinne des Ausschaltens bewegen.

Begriffsliste

1 Gehäuse
2 Antriebswelle
3 Abtriebswelle
4 Zahnrad
5 Zahnrad
6 Zahnrad
7 Zahnrad
8 Reibungskupplung
9 Zwischenrad
10 Flansch
11 Schaltmuffe
12 Bolzen
13 Schrägfläche
14 Nut
15 Reibkörper
16 Reibkörper
17 Drehrichtung
18 Verdrehung
19 Verdrehung
20 Reibkörper
21 Reibkörper
22 Drehrichtung
23
24 Nut
25 Schrägfläche
26 Schrägfläche
27

28 Rotationsebene
29
30 Nut
31 Schrägfläche
32 Nut
33 Schrägfläche
34 Schrägfläche
35 Kante
36 Nut
37 Nut
38 Bolzen
39 Mantelfläche
40 Welle
41 Zahnrad
42 Zahnrad
43 Scheibe
44 Schulter
45 Schaltmuffenträger
46 Schaltmuffe
47 Druckfläche
48 Druckfläche
49 Aussparung
50 Außenlamelle
51 Innenlamelle
52 Außenverzahnung
53 Vorsprung
54 Druckplatte
55 Schulter
56 Schulter
57 Sprengring
58 Sprengring
59 Tellerfeder
60 Tellerfeder
61 Feder
62 Raststift
63 Rastkerbe
64 Schrägfläche
65 Schrägfläche
66 Stein
67 Wälzlager
68 Achse
69 Umfangsnut
70 Bolzen
71 Wälzlager
72 Achse
73 balliger Zapfen
74 Ausnehmung
75 halbkreisförmiger Querschnitt
76 sichelförmiger Querschnitt
77 Seitenfläche
78 Seitenfläche
79 Drehrichtung
80 Leiste
81 Ausnehmung
82 Bohrung
83 Wand
84
85 hufeisenförmiger Querschnitt

86 Seitenfläche
87
88
89 Vielkeilprofil
90 Welle
91 Zahnrad
92 Zahnrad
93 Sprengring
94 Sprengring
95 Führungsmuffe
96 Schaltmuffe
97 Druckfläche
98 Druckfläche
99 Aussparung
100 Außenlamelle
101 Innenlamelle
102 Außenverzahnung
103 Vorsprung
104 Druckscheibe
105 Lamellenträger
106 Kammer
107 Kammer
108 Federpaket
109 Federpaket
110 Winkelring
111 Winkelring
112 Ring
113 Ring
114 Feder
115 Raststift
116 Ausnehmung
117 Gleitstück
118 Tasche
119 Stift
120 Rastkerbe
121 Schlitz
122
123
124 Schrägfläche
125 Schrägfläche
126 Stein
127 Stein
128 Schlitz
129
130 Federkennlinie
131
132 Nocken
133 Schalthebel
134 Drehachse
135 Profilkante
136 Profilkante
137
138
139
140

A Anfang) des $P_z$-unterstützten
E Ende) Schaltablaufs
K Winkel
N Neutralstellung
$P_a$, $P_a'$ Axialkraft
$P_u$ Umfangskraft
$P_z$ Zusatzkraft
R Radius von 86
$S_1$, $S_2$ Schaltweg

## Ansprüche

1) Als federbelastete Sicherheitskupplung ausgebildete schaltbare Reibungskupplung für Zahnradgetriebe, mit einer Schaltmuffe, die im Sinne des Ein-und Auskuppelns axial verschiebbar und in begrenztem Maße verdrehbar auf die zu kuppelnde Welle aufgesetzt ist und die sich zum Erzeugen der Anpreßkraft mittels je eines freien Endes von in ihr aufgenommenen, zumindest annähernd radial gerichteten Bolzen an zur Rotationsebene geneigten Schrägflächen an der Welle abstützt, und mit mindestens einem mittels der Schaltmuffe axial verschiebbaren Reibkörper, der zu einer ersten Kupplungshälfte gehört und der über Reibflächen mit mindestens einem anderen Reibkörper, der zu einer zweiten Kupplungshälfte gehört, zusammenwirkt, wobei sich die beim Einschaltvorgang aufeinandergepreßten Reibkörper gegen eine Feder abstützen, und mit mindestens einem radial verschiebbar in der Welle geführten federbelasteten Raststift, der die Schaltmuffe in einer Neutralstellung arretiert und der beim Einkuppeln an einer Schrägfläche der Schaltmuffe eine axial gerichtete Initialkraft erzeugt, dadurch gekennzeichnet, daß die Schrägflächen im Bereich der Anlage der Bolzen bei Neutralstellung der Reibungskupplung einen größeren Winkel mit der Rotationsebene einschließen als im Bereich der Anlage der Bolzen bei eingeschalteter Kupplung.

2) Reibungskupplung nach Anspruch 1, dadurch gekennzeichnet, daß sich der besagte Winkel zwischen der Anlage der Bolzen bei Neutralstellung und der Anlage der Bolzen bei eingeschalteter Kupplung ständig verringert.

3) Reibungskupplung nach Anspruch 1 oder 2, dadurch gekennzeichnet, daß der besagte Winkel im Bereich der Anlage der Bolzen bei Neutralstellung 90° beträgt.

4) Reibungskupplung nach einem der Ansprüche 1 bis 3, dadurch gekennzeichnet, daß jeder Teil der Schrägfläche zwischen den besagten Anlagen Teil einer Zylindermantel-Fläche ist.

5) Reibungskupplung nach Anspruch 4, dadurch gekennzeichnet, daß die Schrägflächen von auf radialen Achsen drehbar in der Welle gelagerten Rollen gebildet sind.

6) Reibungskupplung nach einem der Ansprüche 1 bis 5, dadurch gekennzeichnet, daß die Schaltmuffe über mindestens eine um eine im wesentlichen senkrecht zur Achse der Welle verdrehbare Exzentereinrichtung mit der Welle verbunden ist, derart, daß die Axialbewegung der Schaltmuffe im Sinne des Einkuppelns sowohl eine Verdrehung der Schaltmuffe relativ zur Welle als auch die zum Verstärken der Anpreßkraft erforderliche axiale Zusatzbewegung bewirkt, wobei die axiale Zusatzbewegung mit zunehmender Relativverdrehung abnimmt, und die Axialbewegung der Schaltmuffe im Sinne des Auskuppelns eine entgegengesetzt gerichtete Verdreh-und axiale Zusatzbewegung bewirkt, wobei die axiale Zusatzbewegung mit abnehmender Relativverdrehung zunimmt.

7) Reibungskupplung nach Anspruch 6, bei der die Feder auf der der Schaltmuffe abgewendeten Seite der Reibkörper angeordnet ist, dadurch gekennzeichnet, daß die mindestens eine Exzentereinrichtung aus einem in einer radialen Bohrung der Welle drehbar aufgenommenen Stein mit halbkreisförmigem oder sichelförmigem Querschnitt besteht, dessen gerade oder konkave Seitenfläche durch die Drehachse des Steins verläuft, und aus einem achsparallel dazu in der Schaltmuffe aufgenommenen Bolzen, der mit einem freien Ende an der geraden oder konkaven Seitenfläche des Steins anliegt, derart, daß -in Drehrichtung der Kupplung gesehen - in einer Neutralstellung der Kupplung die Achse des Bolzens in der Rotationsebene hinter der Drehachse des Steins liegt.

8) Reibungskupplung nach Anspruch 6, dadurch gekennzeichnet, daß der die Schaltmuffe und den mindestens einen Raststift tragende Bereich der Welle als an sich bekannte, drehfest aber axial verschiebbar auf die Welle aufgesetzte Führungsmuffe ausgebildet ist, die sich an ihrer den Reibkörpern abgewendeten Seite über die Feder an der Welle abstützt, und daß die mindestens eine Exzentereinrichtung aus einem in einer radialen Bohrung der Führungsmuffe drehbar aufgenommenen Stein mit halbkreisförmigem oder sichelförmigem Querschnitt besteht, dessen gerade oder konkave Seitenfläche durch die Drehachse des Steins verläuft, und aus einem achsparallel dazu in der Schaltmuffe aufgenommenen Bolzen, der mit einem freien Ende an der geraden oder konkaven Seitenfläche des Steins anliegt, derart, daß -in Drehrichtung der Kupplung gesehen - in einer Neutralstellung der Kupplung die Achse des Bolzens in der Rotationsebene hinter der Drehachse des Steins liegt.

9) Reibungskupplung nach Anspruch 7 oder 8, dadurch gekennzeichnet, daß der Krümmungsradius der konkaven Seitenfläche des Steins im wesentlichen dem halben Durchmesser des Bolzens entspricht.

10) Reibungskupplung nach einem der Ansprüche 7 bis 9, dadurch gekennzeichnet, daß der mindestens eine Stein und/oder der Bolzen wälzgelagert sind bzw. ist.

11) Reibungskupplung nach mindestens einem der Ansprüche 7 bis 10, dadurch gekennzeichnet, daß die Drehbewegung des mindestens einen Steins durch einen Anschlag begrenzt ist.

12) Reibungskupplung nach mindestens einem der Ansprüche 1 bis 11, bei der ein exzentrischer Schaltnocken, dessen Profil in der Leerlaufstellung an umlaufenden, einander zugekehrten Schaltflächen der Schaltmuffe anliegende Profilkanten aufweist und der im aus der Leerlaufstellung geschwenkten Zustand schmaler ist als der Abstand der beiden einander zugekehrten Schaltflächen, vorhanden ist, gekennzeichnet durch die Anordnung der Reibungskupplung auf einer nur in einer Drehrichtung rotierenden Welle und dadurch, daß der Drehpunkt des Schaltnockens - in Drehrichtung der Kupplung gesehen -hinter den Profilkanten des Schaltnockens liegt.

13) Reibungskupplung nach einem der Ansprüche 7 bis 11, gekennzeichnet durch die Anordnung eines zweiten Steins, der achsparallel und spiegelbildlich zum ersten Stein in der Neutralstellung der Kupplung diametral zum ersten Stein am Bolzen anliegt.

14) Reibungskupplung nach Anspruch 13, dadurch gekennzeichnet, daß die Steine im Bereich ihrer geraden oder konkaven Seitenfläche jeweils mindestens einen zurückgesetzten Abschnitt aufweisen, in den der andere Stein mit einem nicht zurückgesetzten Abschnitt hineinragt.

15) Reibungskupplung nach mindestens einem der Ansprüche 1 bis 14, dadurch gekennzeichnet, daß die Veränderung des besagten Winkels und der Verlauf der Kennlinie der Feder über dem axialen Verschiebeweg der Schaltmuffe und/oder der Führungsmuffe derart aufeinander abgestimmt sind, daß die von dem mindestens einen Raststift erzeugte Initialkraft über dem axialen Verschiebeweg der Schaltmuffe gleich klein bleibt oder in Einkuppelrichtung abnimmt.

16) Reibungskupplung nach mindestens einem der Ansprüche 8 bis 15, bei der beiderseits der Führungsmuffe eine Feder angeordnet ist, dadurch gekennzeichnet, daß sich die Federn gegenseitig abstützen.

17) Reibungskupplung nach einem der Ansprüche 1 bis 16, insbesondere solche, die auf einer nur in einer Drehrichtung rotierenden Welle angeordnet ist, dadurch gekennzeichnet, daß der mindestens eine Raststift von einer in Umfangsrichtung der Kupplung wirkenden Schenkelfeder beaufschlagt ist, die mit einem Abschnitt ihrer Windung an einer der Schaltmuffe abgewendeten Fläche des Raststiftes anliegt und deren einer Schenkel in der Welle bzw. in der Führungsmuffe fixiert ist und deren anderer Schenkel in eine radiale Ausnehmung der Schaltmuffe eingreift, wobei die beiden Schenkel einen spitzen Winkel einschließen.

# Fig.1
(Stand d.Technik)

# Fig.2

Fig.3

Fig.4

Fig.5

Fig.6

Fig.7

Fig.10

Fig.11

Fig. 8

Fig. 9

Fig.12

Fig.13

0 253 103

Fig.14

Fig.15

Fig.16

Fig.17

Fig.18

Fig.19

Fig. 26

Fig. 20

Fig. 21

Fig. 22

Fig. 23

Fig. 24

Fig. 25

Fig. 27

Fig. 28

Fig. 29

Fig. 30

Fig. 31

Fig. 32

Fig. 33

Fig. 34

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 203 525 (HERBST) <br> * Insgesamt * <br><br> --- | 1-3 | F 16 D 13/04 <br> F 16 D 21/04 <br> F 16 H 3/14 |
| A | GB-A-2 038 962 (HURTH VERWALTUNGS-GmbH) <br> * Insgesamt * <br><br> --- | 1,6,16 ,17 | |
| A | DE-A-2 728 832 (ZAHNRADFABRIK FRIEDRICHSHAFEN) <br> * Seiten 9-12; Figuren 2-4 * <br><br> --- | 7 | |
| D,A | DE-A-2 828 722 (C. HURTH) <br><br> --- | | |
| D,A | NL-A-8 001 933 (VETUS ANTILLES) | | |

RECHERCHIERTE
SACHGEBIETE (Int. Cl.4)

F 16 D
F 16 H

Der vorliegende Recherchenbericht wurde für alle Patentansprüche erstellt.

| Recherchenort | Abschlußdatum der Recherche | Prüfer |
|---|---|---|
| DEN HAAG | 22-10-1987 | BALDWIN D.R. |